# EUROPÄISCHE PATENTSCHRIFT

(11) **EP 2 496 425 B1**
(45) Veröffentlichungstag und Bekanntmachung des Hinweises auf die Patenterteilung: **09.04.2014**
(21) Anmeldenummer: 10803340.8
(22) Anmeldetag: 03.11.2010
(51) Int. Cl.: B44C 1/00, B44C 5/00, A01G 9/10

(54) **VERFAHREN ZUR HERSTELLUNG EINES FARBIG GESTALTETEN SUBSTRATES**
METHOD FOR PRODUCING A COLORED SUBSTRATE
PROCÉDÉ POUR PRODUIRE UN SUBSTRAT COLORÉ

(30) Priorität: 03.11.2009 DE 102009051797
(43) Veröffentlichungstag der Anmeldung: 12.09.2012
(73) Patentinhaber: Legat, Heiner, 92703 Krummennaab (DE)
(72) Erfinder: Legat, Heiner, 92703 Krummennaab (DE)
(74) Vertreter: von Puttkamer · Berngruber
(86) Internationale Anmeldenummer: PCT/DE2010/001283
(87) Internationale Veröffentlichungsnummer: WO 2011/054343

(56) Entgegenhaltungen:
- EP-A1- 0 074 323
- EP-A1- 1 875 795
- EP-A2- 0 409 186
- WO-A1-2004/033385

## Beschreibung

Die vorliegende Erfindung betrifft ein Verfahren zur Herstellung eines farbig gestalteten Substrates, insbesondere eines Bodensubstrates, das als Pflanzenerde oder als Bodengrund in Gewässern oder Aquarien verwendbar ist.

Aus der DE 102 50 242 A1 ist ein Verfahren zum Herstellen eines Dekomaterials bekannt, das durch Mischen eines Granulat- oder partikelförmigen Ausgangsmaterials mit Farbpigmenten, einem Bindemittel und Sand erfolgt. Aus der DE 202 01 032 U1 geht ein Dekomaterial hervor, das aus mit einem Färbemittel gefärbten Partikeln besteht, die Naturprodukte in Form von Körnern oder Hülsenfrüchten sind. Farbige Zeolithpartikel sind aus der EP 1 875 795 bekannt.

Die Aufgabe der vorliegenden Erfindung besteht darin, ein Verfahren zur Herstellung eines vorzugsweise als Pflanzenerde oder Bodengrund in Gewässern oder Aquarien verwendbaren farbigen Substrates zu schaffen, das als Bodengrund neben seiner dekorativen Wirkung in Gewässern oder Aquarien eine filterende Wirkung oder als Pflanzsubstrat eine wasserspeicherende Wirkung entfaltet. Der Erfindung liegt ferner die Aufgabe zu Grunde, ein Verfahren bereitzustellen, mit dem ein besonders homogener Farbauftrag erreicht werden kann.

Die Aufgabe wird gemäß den Ansprüchen 1-12 gelöst.

Offenbart wird ein Verfahren zur Herstellung eines farbigen Substrates gelöst, das Zeolith-Partikel umfasst, die zur Herstellung eines farbigen Überzuges mit einem farbigen Beschichtungsmaterial beschichtet werden, dessen Viskosität so gewählt wird, dass die in den Oberflächen der Zeolith-Partikel enthaltenen Poren beim Aufbringen des Beschichtungsmaterials zumindest teilweise geöffnet bleiben.

Der wesentliche Vorteil besteht darin, dass das nach dem erfindungsgemäßen Verfahren hergestellte farbige Substrat, das gefärbte Zeolith-Partikel umfasst, im Falle der Verwendung als Pflanzsubstrat eine dekorative und gleichzeitig wasserspeichernde Wirkung entfaltet und im Falle der Verwendung als Bodengrund in Gewässern oder Aquarien neben der dekorativen Wirkung eine filterende Wirkung entfaltet. Bei der Verwendung des vorliegenden Substrates in einem Aquarium oder einem anderen Gewässer besteht ein Vorteil darin, dass die Teilchengröße der Partikel des erfindungsgemäßen Substrates so groß gewählt werden können, dass die Partikel selbst als Bodenbelag verwendbar sind. Eine umständliche Zumischung des Substrates zu einem aus Sand oder Kies bestehenden Bodenbelag ist daher nicht erforderlich. Ein weiterer Vorteil des aus eingefärbten Zeolith-Partikeln bestehenden Substrates liegt darin, dass durch eine gezielte farbige Ausgestaltung der Partikel und somit des Bodenbelages eine bestimmte ästhetisch und dekorative Wirkung sowie gegebenenfalls auch eine Anpassung an den natürlichen Lebensraum bestimmter Aquarienbewohner erzielbar sind. Vorteilhafterweise wird das Algenwachstum in einem Gewässer oder Aquarium bei der Verwendung des vorliegenden Substrates verlangsamt bzw. ganz unterbunden.

Bei der Verwendung des erfindungsgemäßen gefärbten Substrates in einem durchsichtigen Pflanzgefäß besteht der wesentliche Vorteil darin, dass der dekorative Wert des Pflanzgefäßes wesentlich erhöht wird. Dadurch, dass das Pflanzgefäß aus einem durchsichtigen Material besteht, tritt das farbige Substrat optisch deutlich in Erscheinung, wobei die besondere dekorative Wirkung erzielt wird. Die Farbe des Pflanzsubstrates kann dabei auf die Art, z. B. die Blütenfarbe der in dem Pflanzgefäß enthaltenen Pflanzen abgestimmt oder an die jeweilige Umgebung des Pflanzengefäßes angepasst werden. Vorteilhafterweise speichert das aus den gefärbten Zeolith-Partikel bestehende erfindungsgemäße Substrat ebenso wie an sich bekannten Hydrokultur-Substrate Wasser und Nährstoffe sodass die in den durchsichtigen Pflanzgefäßen enthaltenen Pflanzen nicht täglich gegossen werden müssen. Das vorliegende Substrat gibt an die in den Pflanzgefäßen enthaltenen Pflanzen Wasser ab und wirkt nachhaltig als Katalysator, sodass Schadstoffe in kurzer Zeit in harmlose Bestandteile, wie z. B. Wasser und Kohlendioxid, zerlegt werden. Beispielsweise kann das vorliegende Substrat chlorierte und aromatische Kohlenwasserstoffe, Formaldehyd, Triethylenamin, Benzol, Dotetine, sowie aus Zigarrenrauch, Lacken, Reiniger, Kleber, Schaumstoff, Lösungsmittel und Teppichböden stammende Schadstoffe zerlegen. Da sich das im durchsichtigen Pflanzgefäß enthaltende, eingefärbte Substrat beim Eingießen dunkler färbt, muss erst dann gegossen werden, wenn das feuchte, dunkle Pflanzsubstrat wieder seine ursprüngliche, hellere Farbe angenommen hat. Auf diese Weise kann das vorliegende Substrat vorteilhafterweise auch als Anzeigemittel zur Anzeige für das Vorhandensein von für die Pflanzen ausreichenden Wassermengen verwendet werden.

Ein Vorteil des vorliegenden, eingefärbten Substrates besteht auch darin, dass es bei Verschmutzungen mit lauwarmen Wasser gereinigt werden kann, sodass es wieder seine ursprüngliche Farbe erhält.

Bei dem erfindungsgemäßen Verfahren werden die Zeolith-Partikel vor dem Aufbringen des Beschichtungsmaterials mit einem, Staub der Zeolith-Partikel bindenden Bindemittel derart vorbeschichtet, dass das Bindemittel in die Poren eindringt. Dadurch ergibt sich insbesondere ein sehr homogener Farbauftrag.

Als Bindemittel wird vorzugsweise Polyurethan, Epoxid-Harz oder Acryl verwendet. Zur Farbgestaltung enthält das Beschichtungsmaterial zweckmäßigerweise Farbpigmente.

Das Beschichtungsmaterial der vorbestimmten Viskosität bzw. das Bindemittel wird durch Mischen der Zeolith-Partikel mit dem Beschichtungsmaterial aufgebracht. Zum Mischen der Zeolith-Partikel und des Bindemittels bzw. des Beschichtungsmaterials wird besonders bevorzugt ein Freifallmischer verwendet.

Nach dem vorliegenden Verfahren wird ein Substrat mit farbigen Zeolith-Partikeln oder werden farbige Zeolith-Partikel hergestellt, deren Oberflächen mit einem farbigen Überzug derart beschichtet sind, dass die in den Oberflächen angeordneten Poren der Zeolith-Parikel durch den Überzug nicht vollständig verschlossen sind. Die Zeolith-Partikel können dabei mit einem Staub der Zeolith-Partikel bindenden Bindemittel derart vorbeschichtet sein, dass das Bindemittel in die Poren eindringt, wobei das Beschichtungsmaterial auf die derart vorbeschichteten Zeolith-Partikel aufgebracht ist.

Wie eingangs erwähnt, wird das nach dem vorliegenden Verfahren hergestellte Substrat besonders vorteilhaft als Pflanzsubstrat für das Bepflanzen von Pflanzgefäßen oder als Bodengrund in Gewässern oder Aquarien verwendet.

Im Folgenden werden die Erfindung und deren Ausgestaltungen im Zusammenhang mit den Figuren näher erläutert. Es zeigen:
Figur 1 in schematischer Darstellung den Aufbau eines Zeolith-Partikels,
Figur 2 ein erfindungsgemäßes gefärbtes Zeolith-Partikel,

Zu der Erfindung führten die folgenden Überlegungen. Zeolithe bestehen aus einer mikroporösen Struktur aus AlO₄- und SiO₄ Tetraedern. Dabei sind die Aluminium- und Silizium-Atome untereinander durch Sauerstoffatome verbunden. Je nach Strukturtyp ergibt sich dadurch eine Struktur aus gleichförmigen Poren und/oder Kanälen, in denen Stoffe absorbiert werden können. Zeolith-Partikel weisen eine regelmäßige Anordnung von Hohlräumen und Kanälen auf und besitzen daher eine außerordentlich große innere Oberfläche, sodass sie die eingangs genannten vorteilhaften Wirkungen, die das Speichern von Wasser, das Ausfiltern von in Wasser enthaltenen Substanzen, sowie das Zersetzen von Schadstoffen, betreffen, entfalten.

Um die dekorative Wirkung der Zeolith-Partikel zu erreichen, müssen diese eingefärbt werden. Ein Problem besteht dabei jedoch darin, dass beim Aufbringen einer farbigen Beschichtung durch Mischen der Zeolith-Partikel mit dem Beschichtungsmaterial die Poren bzw. Öffnungen der Zeolith-Partikel verschlossen werden, sodass die zuvor genannten Wirkungen nicht mehr entfaltet werden können.

Aus diesem Grunde werden erfindungsgemäß die Zeolith-Partikel mit einem Beschichtungsmaterial mit den gewünschten Farbpigmenten beschichtet, wodurch sich ein ästhetischer Farbüberzug ergibt. Es wird dabei erfindungsgemäß dafür Sorge getragen, dass die Viskosität des Beschichtungsmaterials so gewählt wird, dass die Poren bzw. Öffnungen der einzelnen Zeolith-Partikel beim Mischen des Beschichtungsmaterials und der Zeolith-Partikel nicht vollständig verschlossen werden, sondern zumindest teilweise geöffnet bleiben. Dies bedeutet, dass die Viskosität so gewählt werden muss, dass das Beschichtungsmaterial nicht vollständig in die Poren eindringt und diese verschließt.

Bei einer erfindungsgemäßen Ausgestaltung werden die Zeolith-Partikel vor der Aufbringen des Beschichtungsmaterials mit einem Bindemittel vorbeschichtet, das vorzugsweise keine Farbpigmentierung umfasst. Dadurch wird der Staub der Zeolith-Partikel gebunden und es wird bei dem nachfolgenden Aufbringen des Beschichtungsmittels ein besonders homogener Farbüberzug erreicht. Eine durch den Staubanteil bedingte Abmagerung des Beschichtungsmaterials, die zu einem schlechten Farbüberzug führt, wird vermieden.

Ein wesentlicher Vorteil der Erfindung besteht auch darin, dass infolge des speziellen Aufbaus der Zeolith-Partikel ein Festsetzen von unerwünschten Partikeln auf der Oberfläche der Zeolith-Partikel vermieden wird. Ein solches Festsetzen würde letztlich einen Ionenaustausch verhindern. Erfindungsgemäß wird ein dauerhaftes Festsetzen auf der Oberfläche der vorliegenden, beschichteten Zeolith-Partikel verhindert, weil unerwünschte Partikelmoleküle nicht in die Oberflächenstruktur passen und sich daher nicht festsetzen können. Aus diesem Grunde wird die Möglichkeit eines Ionenaustausches durch die spezielle Oberflächenstruktur des vorliegenden Zeolith-Partikel wesentlich verbessert, und zwar über einen vergleichsweise langen Zeitraum, der wesentlich länger ist als die maximalen drei Monate, die mit bekannten Zeolithen erreichbar sind. Bei den vorliegenden Zeolith-Partikeln funktioniert ein Ionenaustausch über Jahre, was ausgezeichneten Filterwirkungen zur Folge hat.

Ferner kann der Ionenaustausch durch eine gezielte Art der Beschichtung reguliert, d.h, beschleunigt oder herabgesetzt werden. Dies hängt von der erreichten Öffnungsweite der in Abhängigkeit der Beschichtung freigelassenen Poren ab. Dabei kann die Öffnungsweite der Poren in Abhängigkeit von der Viskosität des Beschichtungsmaterials variiert werden.

Wenn man die Beschichtung der vorliegenden Zeolith-Partikel mit Pigmenten versieht, erhält man Zeolith-Partikel in verschiedenen Farben. Ferner können in die Beschichtung selbst weitere Ionenaustauscher eingebunden werden, um verschiedene Wirkungen zu erhalten. Durch die Einbindung von Titandioxid können beispielsweise Gerüche in der Luft zerlegt und beseitigt werden. Die Einbindung von Kupferpartikeln führt zu Oberflächen mit einer zusätzlichen Keimfreiheit und einer zusätzlich fungiziden Wirkung. Die derart beschichteten Zeolith-Partikel können vorteilhafter Weise sehr gut als Zuschlagstoff mit Langzeitwirkung, z. B. in Baustoffen wie Wandputzen oder Plattenmaterialien, eingesetzt werden.

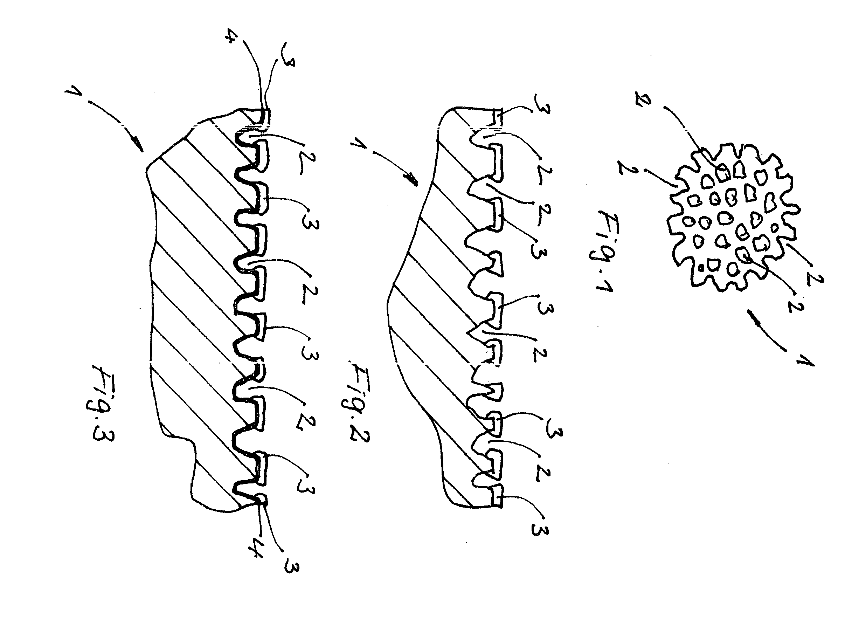

In der Figur 1 ist ein Zeolith-Partikel 1 dargestellt. Es ist erkennbar, dass die Oberfläche des Zeolith-Partikels 1 zerklüftet ist und Öffnungen bzw. Poren 2 aufweist. Um zu verhindern, dass bei einer Beschichtung der Zeolith-Partikel 1 mit einem farbigen Beschichtungsmaterial die Poren 2 der Zeolith-Partikel 1 verschlossen werden, wird die Viskosität des farbigen Beschichtungsmaterials erfindungsgemäß so gewählt, dass es gemäß Figur 2 beim Mischen mit den Zeolith-Partikeln 1 nicht in die Poren 2 der Zeolith-Partikel 1 eindringt. Es entsteht dabei der in der Figur 2 gezeigte farbige Überzug 3, der infolge der Viskosität des Beschichtungsmaterials die Poren 2 im Wesentlichen frei lässt.

Um zu verhindern, dass der im Zusammenhang mit der Figur 2 hergestellte Überzug 3 wegen des hohen Staubanteiles der Zeolith-Partikel 1 eine verminderte Farbwirkung entfaltet, ist es denkbar, vor dem Aufbringen des farbigen Beschichtungsmaterials gemäß Figur 3 zur Herstellung des farbigen Überzuges 3 die Zeolith-Partikel 1 mit einem Bindemittel 4 vorzubeschichten. Dadurch werden Staubteilchen gebunden und wird die Oberfläche der Zeolith-Partikel 1 vorgehärtet. Anschließend wird in der bereits im Zusammenhang mit der Figur 2 beschriebenen Weise das Farbpigmente enthaltende farbige Beschichtungsmaterial aufgebracht, um den farbigen Überzug 3 herzustellen.

Zum Mischen und Beschichten der Zeolith-Partikel mit dem Bindemittel 4 werden vorzugsweise sogenannte Freifallmischer verwendet, deren Drehzahl so steuerbar ist, dass eine möglichst schonende Behandlung der Zeolith-Partikel 1 ermöglicht wird und kein weiterer Abrieb bzw. Staub entsteht. Bei dem Bindemittel 4 kann es sich beispielsweise um PU, EP oder Acryl handeln.

Es hat sich ergeben, dass bei einer Vorbeschichtung der Zeolith-Partikel 1 mit dem Bindemittel 4 eine sehr homogene Fläche der Zeolith-Partikel 1 für den nachfolgenden Auftrag des farbigen Überzuges 3 entsteht, sodass für den Farbauftrag stets dieselben Voraussetzungen vorliegen und Änderungen der Farbe des Farbauftrages 3 nicht zu verzeichnen sind.

### Bezugszeichen:

- 1: Zeolith-Partikel
- 2: Poren
- 3: Überzug
- 4: Bindemittel

## Patentansprüche

1. Verfahren zur Herstellung eines farbig gestalteten Substrates, das Zeolith-Partikel (1) umfasst, die zur Herstellung eines farbigen Überzuges (3) mit einem farbigen Beschichtungsmaterial beschichtet werden, dessen Viskosität so gewählt wird, dass die in den Oberflächen der Zeolith-Partikel (1) enthaltenen Poren (2) beim Aufbringen des Beschichtungsmaterials zumindest teilweise geöffnet bleiben, **dadurch gekennzeichnet, dass** die Zeolith-Partikel (1) vor dem Aufbringen des Beschichtungsmaterials mit einem Staub der Zeolith-Partikel (1) bindenden Bindemittel (4) derart vorbeschichtet werden, dass das Bindemittel (4) in die Poren (2) eindringt.

2. Verfahren nach Anspruch 1, **dadurch gekennzeichnet, dass** als Bindemittel (4) Polyurethan, Epoxid-Harz oder Acryl verwendet wird.

3. Verfahren nach einem der Ansprüche 1 bis 2, **dadurch gekennzeichnet, dass** das Beschichtungsmaterial Farbpigmente enthält.

4. Verfahren nach einem der Ansprüche 1 bis 3, **dadurch gekennzeichnet, dass** das Substrat Zeolith-Partikel (1) umfasst, und dass zur Herstellung des farbigen Überzugs (3) die Zeolith-Partikel (1) mit Beschichtungsmaterial bzw. mit Bindemittel (4) in einer vorbestimmten Viskosität beschichtet werden, wobei die Aufbringung durch Vermischen der Zeolith-Partikel (1) mit dem Beschichtungsmaterial erfolgt.

5. Verfahren nach Anspruch 4, **dadurch gekennzeichnet, dass** zum Mischen der Zeolith-Partikel (1) und des Bindemittels bzw. des Beschichtungsmaterials ein Freifallmischer verwendet wird.

6. Verfahren nach einem der Ansprüche 1 bis 5, **dadurch gekennzeichnet, dass** die Öffnungsseite der Poren (2) der Zeolith-Partikel (1) zur Regulierung des Ionenaustausches durch Einstellen der Viskosität des Beschichtungsmaterials bestimmt wird.

7. Verfahren nach einem der Ansprüche 1 bis 6, **dadurch gekennzeichnet, dass** in das Beschichtungsmaterial zur Bestimmung seiner Eigenschaften zusätzliche Stoffe, vorzugsweise Titandioxid zur Beseitigung von Gerüchen der Luft und/oder zur Herstellung von keimfreien Oberflächen sowie zur Ausbildung einer fungiziden Wirkung vorzugsweise Kupferpartikelchen zugesetzt werden.

8. Substrat, das farbig gestaltet ist und Zeolith-Partikel umfasst, hergestellt nach einem der Ansprüche 1 bis 7, wobei die Oberflächen der Zeolith-Partikel (1) mit einem farbigen Überzug (3) derart beschichtet sind, dass die in den Oberflächen angeordneten Poren (2) der Zeolith-Parikel (1) durch den Überzug (3) nicht vollständig verschlossen sind, **dadurch gekennzeichnet** die Zeolith-Partikel (1) mit einem den Staub der Zeolith-Partikel (1) bindenden und in die Poren eindringenden Bindemittel (4) vorbeschichtet sind.

9. Zeolith-Partikel, deren mit einem farbigen Überzug (3) derart beschichtet sind, dass die in den Oberflächen angeordneten Poren (2) der Zeolith-Partikel (1) durch den Überzug (3) nicht vollständig verschlossen sind, **dadurch gekennzeichnet, daß** die Zeolith-Partikel (1) mit einem Staub der Zeolith-Partikel (1) bindenden auch in die Poren (2) eingedrungenen Bindemittel (4) vorbeschichtet sind.

10. Zeolith-Partikel nach Anspruch 9, **dadurch gekennzeichnet, dass** das Beschichtungsmaterial zur Bestimmung seiner Eigenschaften zusätzliche Stoffe, vorzugsweise Titandioxid zur Beseitigung von Gerüchen der Luft und/oder zur Herstellung von keimfreien Oberflächen sowie zur Ausbildung einer fungiziden Wirkung vorzugsweise Kupferpartikelchen enthält.

11. Verwendung eines Zeolith-Partikel umfassenden Substrates nach Anspruch 8 als Pflanzsubstrat oder als Bodengrund in Gewässern oder Aquarien.

12. Verwendung eines Zeolith-Partikel umfassenden Substrates nach Anspruch 8 als Zuschlagsstoff für Baumaterialien, vorzugsweise für Wandputze oder Plattenmaterialien, oder zur Geruchsbeseitigung.

## Claims

1. Method for producing a coloured substrate comprising zeolite particles (1) which are coated with a coloured coating material in order to produce a coloured coating (3), with the viscosity of the coloured coating material being selected in such a way that the pores (2) contained in the surfaces of the zeolite particles (1) remain at least partially open upon application of the coating material, **characterized in that** the zeolite particles (1) are pre-coated before the application of the coating material with a binding agent (4) binding dust of the zeolite particles (1) in such a way that the binding agent (4) penetrates the pores (2).

2. Method according to claim 1, **characterized in that** polyurethane, epoxy resin or acrylic are used as a binding agent (4).

3. Method according to one of claims 1 to 2, **characterized in that** the coating material contains pigments.

4. Method according to one of claims 1 to 3, **characterized in that** the substrate comprises zeolite particles (1) and that, for producing the coloured coating (3), the zeolite particles (1) are coated with a coating material or a binding agent (4) with a predetermined viscosity, wherein the application takes place by mixing the zeolite particles (1) with the coating material.

5. Method according to claim 4, **characterized in that**, for mixing the zeolite particles (1) and the binding agent or the coating material, a gravity mixer is used.

6. Method according to one of claims 1 to 5, **characterized in that** the opening side of the pores (2) of the zeolite particles (1) is determined by adjusting the viscosity of the coating material in order to control the ion exchange.

7. Method according to one of claims 1 to 6, **characterized in that** additional substances, preferably titanium dioxide for removing odour from the air and/or for producing aseptic surfaces as well as preferably small copper particles for achieving a fungicidal effect, are added to the coating material for determining its properties.

8. Substrate which is coloured and which comprises zeolite particles, with said substrate being produced according to one of claims 1 to 7, wherein the surfaces of the zeolite particles (1) are coated with a coloured coating (3) in such a way that the pores (2) of the zeolite particles (1) arranged in the surfaces are not completely closed by the coating (3), **characterized in that** the zeolite particles (1) are pre-coated with a binding agent (4) binding the dust of the zeolite particles (1) and penetrating the pores (2).

9. Zeolite particles the surfaces of which are coated with a coloured coating (3) in such a way that the pores (2) of the zeolite particles (1) arranged in the surfaces are not completely closed by the coating (3), **characterized in that** the zeolite particles (1) are pre-coated with a binding agent (4) binding dust of the zeolite particles (1) and penetrating the pores (2) as well.

10. Zeolite particles according to claim 9, **characterized in that** the coating material for determining its properties contains additional substances, preferably titanium dioxide for removing odour from the air and/or for producing aseptic surfaces as well as preferably small copper particles for achieving a fungicidal effect.

11. Use of a substrate comprising zeolite particles according to claim 8 as a plant substrate or as a substrate in waters or aquariums.

12. Use of a substrate comprising zeolite particles according to claim 8 as an aggregate for construction materials, preferably for wall plasters or sheet materials, or for the removal of odour.

## Revendications

1. Procédé pour la production d'un substrat coloré qui comprend des particules de zéolithe (1) qui, pour produire un enduit (3) coloré, sont revêtues d'un matériau de revêtement coloré dont la viscosité est choisie telle que les pores (2) contenus dans les surfaces des particules de zéolithe (1) restent au moins partiellement ouverts lors de l'application du matériau de revêtement, **caractérisé en ce qu'**avant l'application du matériau de revêtement, les particules de zéolithe (1) sont préalablement revêtues par des liants (4) qui lient la poussière des particules de zéolithe (1), de telle sorte que le liant (4) pénètre dans les pores (2).

2. Procédé selon la revendication 1, **caractérisé en ce qu'**on utilise en tant que liant (4) du polyuréthane, de la résine époxy ou de l'acrylique.

3. Procédé selon l'une des revendications 1 à 2, **caractérisé en ce que** le matériau de revêtement contient des pigments colorants.

4. Procédé selon l'une des revendications 1 à 3, **caractérisé en ce que** le substrat comprend des particules de zéolithe (1) et **en ce que** pour produire l'enduit (3) coloré, les particules de zéolithe (1) sont revêtues de matériau de revêtement ou de liant (4) à viscosité prédéterminée, l'application étant effectuée en mélangeant les particules de zéolithe (1) avec le matériau de revêtement.

5. Procédé selon la revendication 4, **caractérisé en ce que** pour mélanger les particules de zéolithe (1) et le liant ou le matériau de revêtement, on utilise un malaxeur à chute libre.

6. Procédé selon l'une des revendications 1 à 5, **caractérisé en ce que** le côté d'ouverture des pores (2) des particules de zéolithe (1) pour le réglage de l'échange d'ions est déterminé en ajustant la viscosité du matériau de revêtement.

7. Procédé selon l'une des revendications 1 à 6, **caractérisé en ce que** pour déterminer ses propriétés, on ajoute dans le matériau de revêtement des substances additionnelles, de préférence du dioxyde de titane pour éliminer des odeurs de l'air et/ou de préférence des particules de cuivre pour fabriquer des surfaces aseptiques ainsi que pour réaliser un effet fongicide.

8. Substrat qui est réalisé coloré et qui comprend des particules de zéolithe, produit selon l'une des revendications 1 à 7, les surfaces des particules de zéolithe (1) étant revêtues d'un enduit coloré (3) de telle sorte que les pores (2) des particules de zéolithe (1), agencés dans les surfaces, ne sont pas complètement fermés par l'enduit(3), **caractérisé en ce que** les particules de zéolithe (1) sont préalablement revêtues par un liant (4) qui pénètre dans les portes et qui lie la poussière des particules de zéolithe (1).

9. Particules de zéolithe, dont les surfaces sont revêtues d'un enduit coloré (3) de telle sorte que les pores (2) des particules de zéolithe (1), agencés dans les surfaces, ne sont pas complètement fermés par le revêtement (3), **caractérisé en ce que** les particules de zéolithe (1) sont préalablement revêtues par un liant (4) qui a aussi pénétré dans les pores (2) et qui lie la poussière des particules de zéolithe (1).

10. Particules de zéolithe selon la revendication 9, **caractérisé en ce que** pour déterminer ses propriétés, le matériau de revêtement contient des substances additionnelles, de préférence du dioxyde de titane pour éliminer des odeurs de l'air et/ou de préférence des particules de cuivre pour fabriquer des surfaces aseptiques ainsi que pour réaliser un effet fongicide.

11. Utilisation d'un substrat comprenant des particules de zéolithe selon la revendication 8 à titre de substrat végétal ou à titre de sol dans des milieux aquatiques ou des aquariums.

12. Utilisation d'un substrat comprenant des particules de zéolithe selon la revendication 8 à titre d'agrégat pour des matériaux de construction, de préférence pour des crépis muraux ou des matériaux en plaques ou pour éliminer des odeurs.
